# EUROPÄISCHE PATENTANMELDUNG

(11) **EP 0 769 430 A2**
(43) Veröffentlichungstag der Anmeldung: **23.04.1997**
(21) Anmeldenummer: 96116577.6
(22) Anmeldetag: 15.10.1996
(51) Int. Cl.: B60R 21/26

(54) **Airbag-Modul und Verfahren zu dessen Betrieb**

(30) Priorität: 19.10.1995 DE 19538869
(71) Anmelder: MST Automotive GmbH Automobil-Sicherheitstechnik, 63743 Aschaffenburg (DE)
(72) Erfinder: Fritz, Raimund, 78647 Trossingen (DE)
(74) Vertreter: Fuchs, Luderschmidt & Partner

(57) **Zusammenfassung**

Für ein Airbag-Sicherheitssystem wird ein Airbag-Modul vorgeschlagen, daß einen eingefalteten Gassack (5) einen vor der Gaseintrittsöffnung des Gassacks angebrachten Diffusor (22), wenigstens einen ersten mit verdichtetem Gas (1) und wenigstens einen zweiten mit einer mit einem Zündelement verbundenen Treibstoffladung gefüllten Gasgenerator (7), ein die Gasaustrittsöffnungen (16, 18) der Gasgeneratoren (2, 7) verschließenden Berstverschluß (20) und ein in dem zweiten Gasgenerator (7) angeordnetes Drosselelement (15) umfaßt. Das Airbag-Modul ist dadurch gekennzeichnet, daß die Treibstoffladung aus mehreren Treibsätzen (11, 12) besteht.

## Beschreibung

Die Erfindung betrifft ein Airbag-Modul für Airbag-Sicherheitssysteme, vorzugsweise zur Anordnung im Bereich der den Fahrgastraum eines Kraftfahrzeug begrenzenden Seitenstrukturen (zum Schutz der Fahrgäste bei einem möglichen Aufprall des Kraftfahrzeuges auf ein massives Hindernis), das einen eingefalteten Gassack, einen vor der Gaseintrittsöffnung des Gassacks angebrachten Diffusor, Wenigstens einen ersten, verdichtetes Gas und Wenigstens einen zweiten, eine mit einem Zündelement verbundene Treibladung enthaltenden Gasgenerator, einen die Gasaustrittsöffnungen der Gasgeneratoren verschließenden gemeinsamen Berstverschluß und ein in dem zweiten Gasgenerator angeordnetes Drosselelement umfaßt. Die Erfindung bezieht sich auch auf ein Verfahren zum Betrieb des Airbag-Moduls.

Bei einem solchen, in der WO-A-91/11347 beschriebenen Airbag-Modul sind die beiden Gasgeneratoren zwar getrennt voneinander angeordnet, ihre Gasaustrittsöffnungen, die einen gemeinsamen Berstverschluß aufweisen, münden jedoch in eine außerhalb der Gasgeneratoren liegende Mischkammer, von der aus das Gasgemisch dann über einen Diffusor in den Gassack einströmt. Durch ein in dem zweiten Gasgenerator eingebautes Drosselelement wird der Druckverlauf des aus dem ersten Gasgenerator austretenden Treibgases und/oder das Zeitintervall zwischen dem Aufsprengen des Berstverschlusses und dem Ausströmen des Treibgases gesteuert, um derartige Gasdruckverhältnisse in der Mischkammer zu erreichen, daß ein kontrolliertes Aufblasen des Gassacks erfolgt. Die Öffnung des Drosselelements gewährt nach dem Aufreißen des Berstverschlusses ein dosiertes Nachströmen heißer Treibgase und somit eine gesteuerte Erwärmung des aus dem ersten Gasgenerator ausströmenden Gases, so daß ein vorzeitiger Druckabfall dieses Gases verhindert wird. Ein solches Airbag-Modul besitzt jedoch den Nachteil, daß unmittelbar nach dem Auslösen der Treibladung kurzzeitig ein so hoher Gasdruck entsteht, daß eine beschleunigte Entfaltung des Gassacks erfolgt. Bereits das dabei auftretende schnelle Aufwölben der Abdeckung des Gassacks kann dazu führen, daß bei einem auf der Abdeckung aufliegenden Körper eines Fahrgastes Verletzungen hervorgerufen werden können.

Es ist die Aufgabe der vorliegenden Erfindung, das eingangs beschriebene Airbag-Modul so zu gestalten, daß einerseits nach dem Zünden der Treibladung die Umsetzung des Treibstoffs mit niedriggespannten Gasen und niedrigen Drücken über eine längere Zeitspanne erfolgt, andererseits aber auch das sichere Absprengen des Berstverschlusses gewährleistet ist.

Gelöst ist diese Aufgabe dadurch, daß die Treibladung aus wenigstens einem Primär- und wenigstens einem Sekundär-Treibsatz besteht. Durch den Primär-Treibsatz wird nach dem Zünden der Treibladung für sehr kurze Zeit ein hochgespanntes Gas mit einem Druck erzeugt, der im wesentlichen zum Absprengen des Berstverschlusses ausreicht. Danach fällt der von dem Primär-Treibsatz erzeugte Gasdruck sehr stark ab. Durch das gleichzeitige oder zeitversetzt erfolgende Zünden des Sekundär-Treibsatzes entstehen bei flachem Druckanstieg niedriggespannte Gase mit niedrigen Drücken, durch die die Abkühlung und damit der Druckverlust des aus dem ersten Gasgenerator austretenden Gases ausgeglichen wird.

In den Unteransprüchen 2 bis 7 sind weitere Ausbildungen des Airbag-Moduls gemäß Anspruch 1 angegeben.

Bei Verfahren zum Betrieb des Airbag-Moduls wird durch den gezündeten Primär-Treibsatz kurzzeitig ein hochgespanntes Gas mit hohem Druck erzeugt.

Die Erfindung ist in der Zeichnung beispielhaft dargestellt und wird nachfolgend näher erläutert. Es zeigen:
- Fig. 1: einen Vollschnitt durch das Airbag-Modul in Richtung der Längsachse und
- Fig. 2: den Druckverlauf der Umsetzung des Primär- und Sekundär-Treibsatzes
- Fig. 3: eine Alternative zu Fig. 1.

Der verdichtetes Gas (1) enthaltende ringhohlzylinderförmige erste Gasgenerator (2) besitzt einen an seiner Außenumfangsfläche umlaufenden Außenflansch (3), an dem das kreisringförmige Halteblech (4) des Gassacks (5) befestigt ist. In die von der Innenumfangsfläche des ersten Gasgenerators (2) umschlossene Durchgangsöffnung (6) ist der topfförmige mit Treibladung gefüllte zweite Gasgenerator (7) formschlüssig eingefügt. In einer Durchbrechung (8) seines Bodens (9) ist ein elektrisches Zündelement (10) gasdicht eingesetzt. Der größte Teil des Volumens des zweiten Gasgenerators (7) wird durch einen Sekundär-Treibsatz (11), an dem der Primär-Treibsatz (12) anliegt, eingenommen. Der zweite Gasgenerator (7) stößt mit seinem oberen Rand an einen auf der Innenumfangsfläche des ersten Generators (2) angebrachten Innenflansch (13) an. Vom oberen Rand des zweiten Gasgenerators (7) her ist auf dessen Innenseite eine umlaufende Senkung (14) vorgesehen, in der ein hutmanschettenartiges Drosselelement (15) mit mindestens einer zentral oder quer angeordneten Gasaustrittsöffnung (16) längsverschieblich gelagert ist, wobei der Hutteil des Drosselelements (15) in die von dem Innenflansch (13) umschlossene Durchgangsöffnung (17) hineinragt. Die Gasaustrittsöffnung (16) und die oberhalb des Innenflansches (13) liegenden Gasaustrittsöffnungen (18) des ersten Gasgenerators (2) sind durch eine gemeinsame, Sollreißlinien (19) aufweisende Berstscheibe (20) verschlossen. Oberhalb der Berstscheibe (20) liegt ein kreiszylinderförmiger Raum (21), der gassackseitig durch ein Ableitblech (22) und am Umfang durch einen kreisringförmigen Fortsatz (23) des ersten Gasgenerators (2) umschlossen ist, der durch seitliche Bohrungen unterbrochen ist.

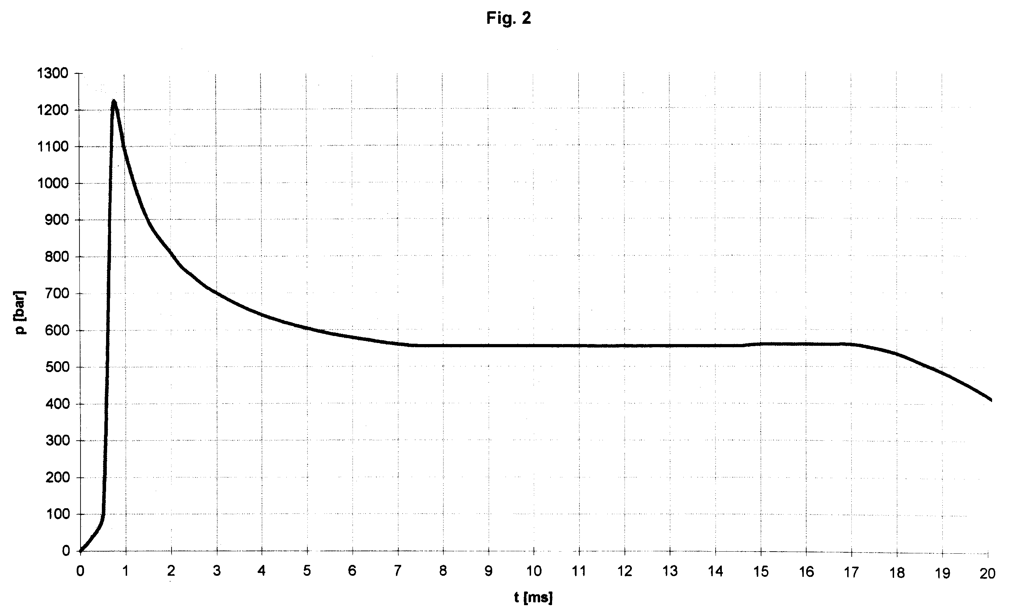

Die Aktivierung des Airbag-Moduls erfolgt in der Weise, daß über das elektrische Zündelement (10) der Primär-Treibsatz (12) angezündet wird. Wie Fig. 2 zeigt, entwickelt sich dann innerhalb von 1 ms ein Treibgas mit einem Druck von 1200 bar. Durch diesen Gasdruck wird das Drosselelement (15) aus seiner Grundposition in Richtung auf die Berstscheibe (20) verschoben, so daß diese entlang der Sollreißlinien (19) abgesprengt und in den Raum (21) verlagert wird. Das aus den Gasaustrittsöffnungen (18) des ersten Generators (2) austretende Gas wird in dem Raum (21) mit dem aus dem zweiten Gasgenerator (7) über die Durchgangsöffnung (16) des Drosselelements (15) ausströmende Gas gemischt.

Dieses Gas entsteht dadurch, daß gleichzeitig mit dem Anzünden des Primär-Treibsatzes (12) und/oder mit Hilfe des Primär-Treibsatzes auch die Zündung des Sekundär-Treibsatzes (11) ausgelöst wird. Es erfolgt, wie Fig. 2 zeigt, ein vergleichsweise langsamer Druckanstieg bis auf etwa 540 bar, der über eine Zeitspanne von ca. 10 ms bestehen bleibt und dann langsam in etwa 7 ms auf den Wert 0 abläuft. Infolge des Ablaufs der Umsetzung des Sekundär-Treibsatzes (11) und durch die Steuerung des in den Raum (21) über die Durchgangsöffnung (16) des Drosselelements (15) einströmenden Gases wird die Abkühlung des aus dem ersten Gasgenerator (2) ausströmenden Gases ausgeglichen bzw., es wird eine zusätzliche Erwärmung erzielt, so daß die Größe des Gasdruck-Anstiegsgradienten beim Einströmen des Gases über den Diffusor (22) in den Gassack (5) relativ niedrig ist und demzufolge sich der Gassack vergleichsweise langsam entfaltet.

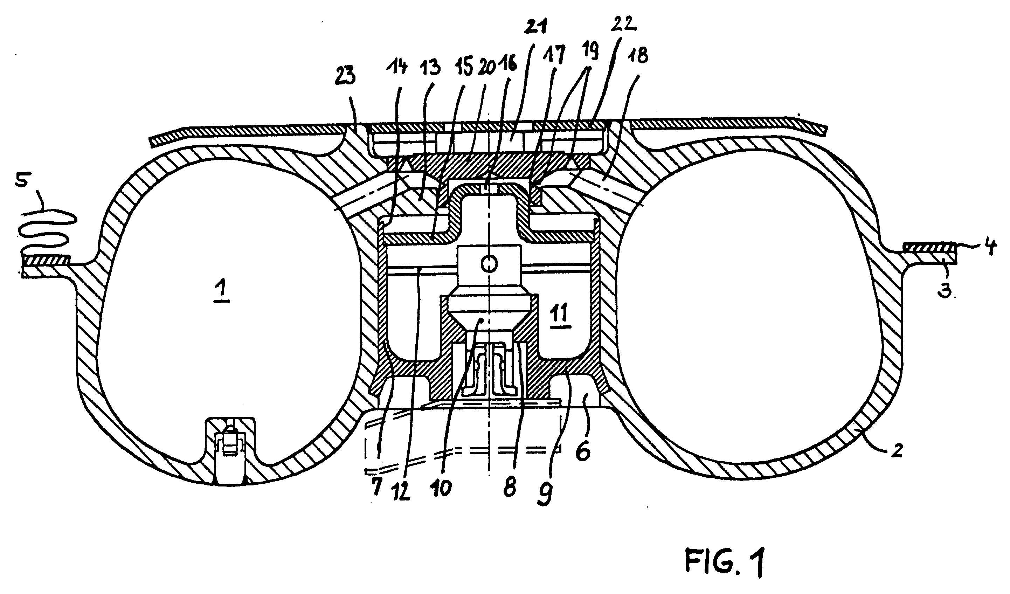

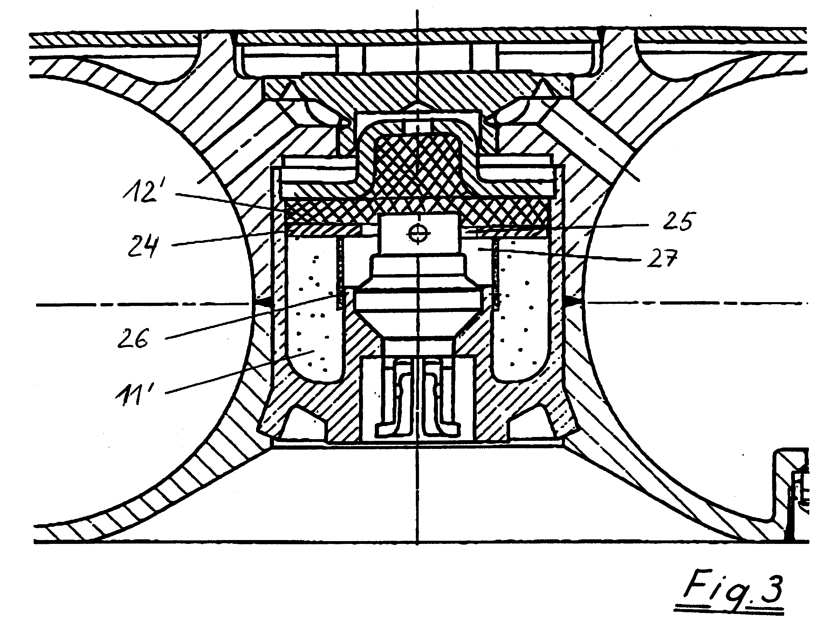

Bei der in Fig. 3 dargestellten Alternative zu Fig. 1 füllt die Primärladung (12) den Raum zwischen einer Trennscheibe (24) und dem hutförmigen Drosselelement (15) aus, während der Raum unterhalb der Trennscheibe (24) wiederum im wesentlichen mit einem Sekundär-Treibsatz (11) gefüllt ist. Die Trennscheibe (24) weist innenseitig eine kreisringförmige Zündöffnung (25) auf. Mittels eines Papierzylinders (26) ist zwischen der Zündöffnung (25) und dem Sekundär-Treibsatz (11) ein Hohlraum (27) ausgebildet, dessen Auslegung hinsichtlich Form und Größe eine weitere Möglichkeit eröffnet, den Abbrand der Treibladungen zu steuern. Soweit die Bauteile in Fig. 3 nicht mit Bezugsziffern versehen sind, unterscheiden sie sich nicht von der Ausführungsform gemäß Fig. 1.

Das Ziel der zweistufigen Heizladung besteht darin, daß einerseits die Primärladung die Sekundärladung trotz des hohen Druckimpulses nicht zu heftig anzünden darf (erosiver Anbrand), daß andererseits die Sekundärladung auch nicht zu inert sein sollte, da sie einen relativ lange andauernden Druckimpuls erzeugen soll. Das Problem läßt sich auf zwei Weisen lösen:
a) Mit Hilfe einer stark beschichteten Sekundärladung. In diesem Falle wird die Anzündung durch eine inerte Beschichtung gebremst, während der Abbrand der Sekundärladung unterhalb der Beschichtung normal weitergeht (Fig. 1).
b) Mit Hilfe einer Trennscheibe zwischen Primär- und Sekundärladung, verbunden mit einem kleinen Hohlraum an der Stelle, an der die Schwaden der Primärladung die Sekundärladung anzünden sollen (Fig. 3). Mit diesem Hohlraum, der zur Sekundärladung hin oder durch eine dünne Inertschicht (z.B. aus Papier) abgetrennt ist, läßt sich der erosiver Abbrand ebenfalls bremsen. die Trennscheibe bremst das Abströmen der Schwaden der Sekundärladung beim Abbrand kaum, so daß sich auch mit dieser Anordnung der gewünschte Effekt erzielen ließe. Eine Kombination der beiden Ausführungen ist ebenfalls denkbar.

Die mit der Erfindung erzielten Vorteile sind insbesondere darin zu sehen, daß der Bag-Entfaltungsvorgang mit geringer Aufblasgeschwindigkeit beginnt, um die hohen Verletzungsrisiken zu minimieren, die bei "out of position"-Situationen auftreten können.

## Patentansprüche

1. Airbag-Modul für Airbag-Sicherheitssysteme, umfassend einen eingefalteten Gassack (5), einen vor der Gaseintrittsöffnung des Gassacks angebrachten Diffusor (22), wenigstens einen ersten mit verdichtetem Gas (1) und wenigstens einen zweiten mit einer mit einem Zündelement verbundenen Treibstoffladung gefüllten Gasgenerator (7), ein die Gasaustrittsöffnungen (16, 18) der Gasgeneratoren (2, 7) gemeinsam verschließenden Berstverschluß (20) und ein in dem zweiten Gasgenerator (7) angeordnetes Drosselelement (15), dadurch gekennzeichnet, daß die Treibstoffladung aus mehreren Treibsätzen (11, 12) besteht.

2. Airbag-Modul nach Anspruch 1, dadurch gekennzeichnet, daß die Treibstoffladung aus einem Primär- (12) und einem Sekundär-Treibsatz (11) besteht.

3. Airbag-Modul nach einem der Ansprüchen 1 und 2, dadurch gekennzeichnet, daß die Treibsätze (11, 12) unterschiedliche Dichten besitzen.

4. Airbag-Modul nach einem der Ansprüchen 1 und 2, dadurch gekennzeichnet, daß der Primär-Treibsatz (12) eine größere Umsetzungsgeschwindigkeit und einen höheren Gasdruck als der Sekundär-Treibsatz (11) besitzt.

5. Airbag-Modul nach einem der Ansprüchen 1 bis 4, dadurch gekennzeichnet, daß der Primär-Treibsatz (12) eine Umsetzungszeit von wenigen ms und einen sehr hohen Gasdruck und der Sekundär-Treibsatz (11) eine Umsetzungsgeschwindigkeit von mehreren ms und einen sehr niedrigen Gasdruck aufweisen.

6. Airbag-Modul nach einem der Ansprüchen 1 bis 5, dadurch gekennzeichnet, daß das Gewicht des Primär-Treibsatzes (12) 2,5 bis 20% des Gewichts des Sekundär-Treibsatzes (11) beträgt.

7. Airbag-Modul nach einem der Ansprüchen 1 bis 7, dadurch gekennzeichnet, daß sich zwischen Primär- und Sekundär-Ladung ein Element befindet, daß das Durchzünden von der Primärladung auf die Sekundärladung steuert, insbesondere in vorgebbarem Umfang drosselt.

8. Verfahren zum Betrieb des Airbag-Moduls nach einem der Ansprüchen 1 bis 6, dadurch gekennzeichnet, daß durch den gezündeten Primär-Treibsatz (12) kurzzeitig ein hochgespanntes Gas mit hohem Gasdruck erzeugt wird.
